(19) Europäisches Patentamt
European Patent Office
Office européen des brevets

(11) **EP 4 524 525 B1**

(12) **EUROPEAN PATENT SPECIFICATION**

(45) Date of publication and mention
of the grant of the patent:
**06.08.2025 Bulletin 2025/32**

(21) Application number: **23196989.0**

(22) Date of filing: **12.09.2023**

(51) International Patent Classification (IPC):
**G01F 23/284** (2006.01)   **G01F 23/2962** (2022.01)
**G01S 13/88** (2006.01)

(52) Cooperative Patent Classification (CPC):
**G01F 23/284; G01F 23/2962; G01S 7/2923;**
**G01S 7/412; G01S 13/10; G01S 13/70**

(54) **METHODS FOR DETERMINING A LEVEL OF A MEDIUM IN A CONTAINER, COMPUTER READABLE MEDIA, AND PROBING SYSTEMS**

VERFAHREN ZUR BESTIMMUNG EINES FÜLLSTANDS EINES MEDIUMS IN EINEM BEHÄLTER, COMPUTERLESBARE MEDIEN UND SONDIERUNGSSYSTEME

PROCÉDÉS DE DÉTERMINATION D'UN NIVEAU D'UN SUPPORT DANS UN RÉCIPIENT, SUPPORT LISIBLE PAR ORDINATEUR ET SYSTÈMES DE SONDAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.03.2025 Bulletin 2025/12**

(73) Proprietor: **SICK AG**
**79183 Waldkirch (DE)**

(72) Inventors:
• **Goodyer, Alexander Frederick**
**Suffolk, CB9 9FB (GB)**
• **Ahmad, Bashar**
**Cambridge, CB1 3PG (GB)**
• **Godsill, Simon**
**Cambridge, CB2 1PZ (GB)**

(74) Representative: **Manitz Finsterwald**
**Patent- und Rechtsanwaltspartnerschaft mbB**
**Martin-Greif-Straße 1**
**80336 München (DE)**

(56) References cited:
US-A- 5 587 969      US-A1- 2010 006 786
US-B2- 11 193 809

**Description**

The present disclosure relates to methods for determining a level of a medium in a container, computer readable media, and probing systems.

Determining the level of a medium (for example a fluid, in particular a liquid, such as oil or water, or a mixture of different fluid) in a tank or container with high accuracy may be an important task in various applications.

The fluid as referred to herein may be a liquid.

The level of the medium may be determined from Time Domain Reflectometry (TDR) sensor data, which may also be referred to as an echo curve.

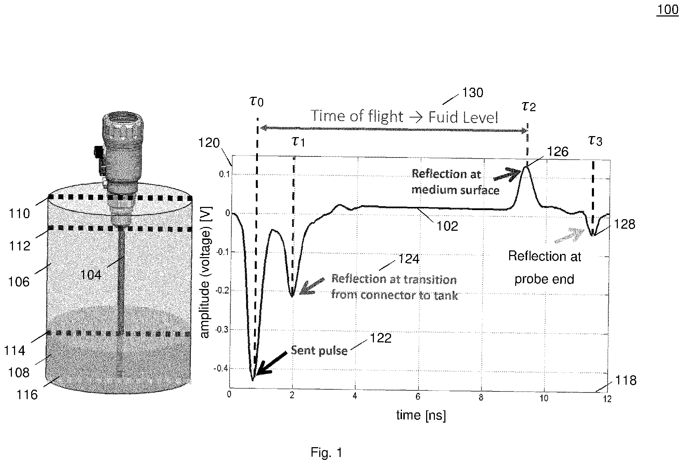

Fig. 1 shows an illustration 100 of an echo curve 102 to illustrate the TDR concept. A horizontal axis 118 illustrates time (for example in ns), and a vertical axis 120 illustrates an amplitude, for example a voltage (for example in V). Determining the level 114 of the medium 108 in a container 106 (which may also be referred to as tank) may be achieved by sending a pulse down a TDR probe 104 (which may be straight and vertical), which is inserted into the container 106, and recording the resultant reflections, which collectively form the echo curve 102. The peak 122 at time $\tau_0$ may correspond to the time of the sent pulse (corresponding to level 110 in the container 106). The peak 124 at time $\tau_1$ may correspond to a reflection at the transition from the connector of the probe 104 to the container 106 (and may be a reflection due to impedance mismatch), and may correspond to level 112 in the container 106. The peak 126 at time $\tau_2$ may correspond to a reflection at the surface of the medium 108 in the container 106, and may refer to the level 114 of the medium in the container 108. The peak 128 at time $\tau_3$ may correspond to a reflection from the end of the probe 104, and may correspond to a level 116 in the container 108. The desired ToF 130 to determine the level 114 of the medium in the container 106 is $\tau_2$ - $\tau_0$. By determining the ToF 130, and knowing the speed of the signal emitted by an emitter of the probe 104, the distance between the emitter of the probe 104 and the surface of the medium may be determined.

As explained with reference to Fig. 1, the medium level may be determined based on estimating the locations of positive reflection(s) in the echo curve, i.e. a Time of Flight (ToF) estimation task. A positive reflection may be a reflection related to a peak facing upwards (like peak 126). A negative reflection may be a reflection related to a peak facing downwards (like peaks 122, 124, 128). For example, the most positive reflection may occur at the medium surface. Time of flight (ToF) may then be mapped into a medium level, for example depending on the probe length. This however, may be challenging when the medium level is low (so that a reflection from the probe end may overlap with a reflection from the medium), and/ or when there is foam above the medium surface, and/ or the medium is layered (for example when the medium is a mixture of different fluids, in particular a liquids, with different densities lying layer on layer, which may lead to several positive reflections).

Presently used methods may use a thresholding procedure where a positive value is defined and a reflection in the echo curve exceeding this level is considered to be from the medium level. Its location (in other words: its time-instant) may be used to estimate the ToF. This may be combined by an interpolation method to improve the ToF estimation. Such a method, however, cannot reliably measure the medium level when the fluid level within the container is low (for example less than 7 cm) and/ or the fluid has foam above it and/ or the medium is a layered medium.

Presently used systems may address TDR performance issues for low fluid levels with TDR sensor probes having a vertical and horizontal part. Thus, mechanical changes to conventional TDR sensors with a straight probe may be made. This, however, may limit the applicability of the TDR sensors due to a complicated shape of the probe. For example, the horizontal part of the probe cannot be easily instrumented within typical containers. Moreover, it is a costly solution and difficult to manufacture.

Other presently used system may formulate the ToF estimation problem with sampling below Nyquist rate using finite rate of innovation approach. This, however, may lead to degradation in performance due to using sub-Nyquist rates which are no longer a limitation with other innovations, e.g. time-equivalent-sampling, enabling data acquisition at the required rates within longer time windows, and may require a substantial change to the hardware of the TDR sensors (for example for established legacy designs).

In presently used methods, the TDR sensor may send a narrow(er) pulse, i.e. wideband in the frequency domain, to address challenges due to overlapping pulses in the echo curve. This, may however complicate and increase the cost of the hardware involved, for example the processing chain, and may have limited impact on the achieved accuracy for low fluid levels.

US 11 193 809 B2 discloses a guided wave radar (GWR) level transmitter which may comprise a waveguide probe to be positioned in a tank containing media, a measurement circuit, and a compute device. The measurement circuit may transmit a series of pulses along the waveguide probe and measure a series of reflected waveforms, where each of the series of reflected waveforms resulting from transmission of one of the series of pulses along the waveguide probe. The compute device may implement an expert control system to determine a level of the media in the tank, where the expert control system comprises (i) a knowledge base incorporating prior knowledge and (ii) an inference engine to apply logical rules from the knowledge base to evaluate information contained in the series of reflected waveforms to determine the level of media in the tank. The prior knowledge may comprise a system model of the GWR level transmitter, behaviors associated with typical level measurement applications, and/or system parameters supplied by a user of the GWR level transmitter.

US 5 587 969 A discloses that in a first step, an individual echo is associated with each local maxima in the received ultrasonic signal. Subsequently, characteristic features such as time position, amplitude and form factor of each respective individual echo are detected numerically for the individual echo. In a second step, the mentioned features are subjected to a fuzzy evaluation. The features form the input variables of the evaluation. A multiple echo probability for each individual echo is available as the result.

US 2010/006786 A1 discloses a method and apparatus which provide for noncontact optical measurement of the level of a fluid stored in a tank or container, the surface of the fluid being possibly agitated. The method processes numerically the digitized signal waveforms generated by a lidar apparatus based on a pulsed time-of-flight modulation scheme. A step of the numerical processing is the computation of a waveform in which each data point is obtained from a statistical estimator of the variability of the amplitude signal echo measured at the distance from the lidar apparatus that corresponds to the rank of the data point in the waveform.

It is an objective of the present invention to provide methods, computer readable media and probe systems for determining a level of a medium in a container. In particular, methods, computer readable media and probe systems shall be provided which have the above mentioned properties of being able to reliably determine a level of a medium in a container even under difficult circumstances like low medium level, layered medium or foam on the medium.

The objective is solved by a computer implemented method for determining a level of a medium in a container according to claim 1, a non-transitory computer readable medium according to claim 13, and a probing system according to claim 14. Embodiments are given in the subclaims, the description and the drawings.

In one aspect, the present disclosure is directed at a computer implemented method for determining a level of a medium in a container, comprising the following steps carried out by computer hardware components: sending a plurality of pulses through a probe in the container; sensing responses caused by reflections of the pulses; determining a statistical model related to the medium in the container based on the responses; and determining the level of the medium in the container based on the statistical model, wherein the statistical model represents an echo curve.

In other words, a statistical model may be used for determining the level of the medium. This may allow a robust detection of the level of the medium.

The statistical model represents an echo curve. It has been found that instead of analysing a single echo curve, analysing a statistical model of the echo curve may increase robustness of the determination of the level of the medium.

The statistical model may comprise a probability distribution. The probability distribution may represent probabilities of peaks.

The statistical model may be determined based on fitting parameters of the probability distribution to the sensed responses. The parameters may comprise one or more of: mean, amplitude, and number of peaks.

The statistical model may be determined using a Markov Chain Monte Carlo interference technique.

Determining the statistical model may comprise adding peaks (which may be referred to as a "birth" of a peak), removing peaks (which may be referred to as a "death" of a peak), or maintaining a number of peaks. In any case (adding a peak, removing a peak, or maintaining the number of peaks), data such as location of each peak and amplitude of each peak may be updated based on measurement data.

A prior (in other words: a starting assumption on the probability distribution) and/or proposal distributions (in other words: (probability) distributions which may be used to update the estimate for the probability distribution) in the statistical model may be determined based on a peak proximity parameter (PPP, which may also be referred to as $\delta$). It has been found that avoiding detecting peaks too close to each other may increase the robustness of the determination of the level of the medium.

The computer implemented method may further comprise determining point estimates for locations and amplitudes of (for example positive) pulses based on the statistical model. The level of the medium in the container may be determined based on the point estimates.

The computer implemented method may further comprise determining locations of the reflections based on the point estimates. The level of the medium in the container may be determined based on the locations of the reflections. The level of the medium in the container may be determined using at least one pre-determined rule based on the locations of the reflections.

The computer implemented method may further comprise tracking of the level of the medium in the container. This may increase robustness of the determination of the level of the medium by including a history of previous measurement data.

The computer implemented method may further comprise decomposing the statistical model into a plurality of reflections. The computer implemented method may further comprise identifying the medium based on the plurality of reflections.

The computer implemented method may further comprise identifying a medium situation based on the plurality of reflections. The medium situation may comprise at least one of a situation with one and only one layer of medium, a situation with a plurality of layers of medium, or a situation with presence of foam.

According to another aspect, a non-transitory computer readable medium may comprise instructions which, when executed by a computer system, make the computer system carry out the computer implemented method as described herein.

According to another aspect, a probing system may comprise: an emitter configured to send a plurality of pulses through a probe in a container; a sensor configured to sense responses caused by reflections of the pulses; and a determination circuit configured to determine a statistical model related to a medium in the container based on the responses, and to determine a level of the medium in the container based on the statistical model, wherein the statistical model represents an echo curve. The emitter and the sensor may be provided in a shared device, which may be referred to as "probe", and may share parts; for example, some parts of the probe may be used while emitting, and the same parts may be used for detection.

The methods as described herein may also be applied to radar sensors (where also overlap of pulses may occur), for example freely emitting radar sensors, for example without any specific probe to transmit pulses. Similarly, a probing system using radar pulses may be used.

Exemplary embodiments and functions of the present disclosure are described herein in conjunction with the following drawings, showing schematically:

| | |
|---|---|
| Fig. 1 | an illustration of an echo curve to illustrate the TDR concept; |
| Fig. 2A | an illustration of the fitted curves for the model using $\delta$ and the model not using $\delta$ over the data according to various embodiments; |
| Fig. 2B | an illustration of the approximate posteriors, for the final data set according to various embodiments; |
| Fig. 3A | an illustration of peaks from all samples of the model with $\delta$ according to various embodiments, overlaid with the data and the ground truth level; |
| Fig. 3B | an illustration of peaks from all samples of the model without $\delta$ according to various embodiments, overlaid with the data and the ground truth level; |
| Figs. 4A and 4B | illustrations of the full posterior according to various embodiments for two peaks; |
| Figs. 5A and 5B | illustrations of the full posterior according to various embodiments for three peaks; |
| Figs. 6A and 6B | illustrations of the full posterior according to various embodiments for four peaks; |
| Fig. 7 | a flow diagram illustrating a method for determining a level of a medium in a container according to various embodiments; and |
| Fig. 8 | a computer system with a plurality of computer hardware components configured to carry out steps of a computer implemented method for determining a level of a medium in a container according to various embodiments. |

According to various embodiments, an advanced Bayesian estimation method may be provided for the estimation of the locations of all reflections in the echo curve and their amplitudes. With these methods, the medium level may be estimated accurately even if it is very low and layered.

Accurate estimation of the medium level may be achieved by fitting the echo curve into a statistical model.

As will be described in more detail below, at any time instant $t_k$, the echo curve may be described by the sum of an unknown number $N$ of Gaussian pulses $\phi(t_k|\mu_n,\sigma^2)$, wherein the means $\mu_n$ (in other words: location along time axis) and scaling values $A_n$ are to be estimated, and the variance $\sigma^2$ (in other words, the width of the sent pulse) is known. Thus, the echo curve at a time instant $t_k$ may be expressed as

$$y_k = x(t_k) + \varepsilon_k, x(t_k) = \sum_{n=1}^{N} A_n \phi(t_k|\mu_n, \sigma^2) + \varepsilon_k, x(t_k)$$

where Gaussian noise $\varepsilon(t_k)$ is added to represent measurements errors.

By defining statistical priors on the unknowns, i.e. $A_n$ (for example Gaussian with a standard deviation of 1000), $\mu_n$ (for example uniform distribution with non-zero support from zero to the latest possible reflection from the probe end) and $N$ (for example a discrete set of possibilities such as $N \in \{3,6,10,25,30\}$, etc.):

a) Markov Chain Monte Carlo (MCMC) inference technique may be applied to determine the full probability distribution, i.e. posterior $p(\mathbf{a}, \boldsymbol{\mu}, N|\mathbf{x})$ from the $M$ available echo curve samples $\mathbf{x} = [x(t_1), \dots , x(t_M)]'$ with $\mathbf{a} = [a_1, \dots , a_N]'$ and $\boldsymbol{\mu} = [\mu_1, \dots , \mu_N]'$. According to various embodiments, various design choices (as described in more detail below), including selecting priors and sampling-pruning procedures, may be made to ensure the MCMC is robust and its implementation is computationally efficient.

b) Point estimates for the positive pulse locations and amplitudes may be obtained (e.g. means from the posterior); and

c) Reflection from the medium level may be obtained from the point estimates using fixed rules (for example assuming that the largest positive reflection earlier than the largest negative reflection, i.e. from probe end, pertains to the medium level).

According to various embodiments, a reversible jump Markov chain Monte Carlo method may be provided for efficient inference for the general problem of pulse fitting. In particular, the potential of an adopted parametric model overfitting to the (noisy) data via the inclusion of a peak proximity parameter may be reduced. This may facilitate learning a more representative underlying model and may reduce the computational cost. Synthetic and real data may be used to demonstrate the efficacy of the introduced Bayesian technique.

"Reverse Jump MCMC (RJ-MCMC) inference algorithm for TDR with a peak proximity parameter" may be a principled formulation for determining the number of pulses in the echo curve.

Pulse fitting may refer to a problem occurring in many applications, such as Nuclear Magnetic Resonance spectroscopy and Time Domain Reflectometry (TDR). The goal of pulse fitting may be to estimate the parameters of underlying pulses from which the observed data are generated. For example, amplitudes may be used to inspect the faultiness of wires. In TDR, which follows the same principles as guided radar, an electromagnetic pulse may be sent down a probe and the combination of attained reflections yields the echo curve. Another TDR instrumentation, with numerous uses in the food, beverage, and pharmaceutical industries, may be employed to measure the medium/fluid levels in sealed industrial containers. Here, the location of the pulse reflected by the fluid surface may correspond to its level in the container (so can be seen as a Time of Flight (ToF) inference problem). Estimating this pulse location may be especially challenging when the reflection pertaining to the fluid surface is severely obfuscated by other reflections, for instance, from the probe's end when the fluid level is low (i.e., the peak at $\tau_2$ can be too low to detect or be concealed by that at $\tau_3$, as illustrated in Fig. 1) and/or for mediums with a low dielectric constant, which are less reflective and/or in case the reflections of the fluid overlap with reflections from the mechanical container construction.

For simplicity, and without loss of generality, details may be provided for a one-dimensional case. It will be understood that a higher dimensional case may be provided accordingly.

Each datum, $y_k$, may be assumed to be a discretised observation of a continuous curve of pulses, $x(t)$, with additive Gaussian noise. To further simplify, pulses may be illustrated to be restricted to (unnormalised) Gaussian shapes of equal and known variance, $\sigma^2$. Other pulse shapes, such as log-normal or Lorentzian may also be used. Thus, for all $k = 1, \dots ,K,$

$$y_k = x(t_k) + \varepsilon_k, \quad x(t) = \sum_{i=1}^{N} A_i \phi(t \mid \mu_i, \sigma^2), \qquad (1)$$

$$\varepsilon_k \overset{iid}{\sim} \mathcal{N}(0, \sigma_y^2), \quad \phi(t \mid \mu, \sigma^2) = e^{-\frac{(t-\mu)^2}{2\sigma^2}},$$

where $t_k$ is the $k^{th}$ sampling time of $t = (t_1, \dots , t_K)^T$ and $\sigma_y^2$ is the measurement noise variance. The quantities of interest are the peak locations, $\boldsymbol{\mu} = (\mu_1, \dots , \mu_N)^T$, and the amplitudes, $\boldsymbol{A} = (A_1, \dots , A_N)^T$, with $N$ the number of peaks, which is unknown. The methods according to various embodiments may determine $\boldsymbol{\mu}$, and/ or $A$, and/ or $N$.

As used herein, vectors are printed in bold, and scalars and matrices are printed non-bold.

According to various embodiments, a peak proximity parameter (PPP), which may be referred to as $\delta$, may be introduced into both the prior and the proposal distributions of a Markov Chain Monte Carlo (MCMC) method. Markov Chain Monte Carlo are known as such and are widely used.

According to various embodiments, a Reversible Jump MCMC (RJ-MCMC) inference scheme for pulse fitting may be provided. As described herein, methods both with and without use of the PPP are compared to demonstrate the value of this addition on both synthetic and real data.

In the frequency domain (and/ or in the frequentist domain), pulse fitting may be handled by a non-linear least squares approach, or with a variation thereof, such as a weighted least squares method, which focuses on fitting the most meaningful peaks. Within a Bayesian framework, a RJ-MCMC scheme may be utilised, where the reversible jump may be used to generate samples with different numbers of peaks. To achieve a variation in peak numbers, a birth-and-death MCMC scheme may be used, where additional peaks may be introduced (corresponding to "birth") or where peaks may be removed (corresponding to "death"). Due to the data-driven proposal distributions used, dimension-changing steps (for example "birth" step or "death" step) being rejected too often (which would make the sampling inefficient) may be largely circumvented, as proposals may have high likelihood contributions.

RJ-MCMC may be an extension of MCMC which allows so-called 'reversible jump' moves. These may yield a parameter's sample having different dimensionality to the previous. As described herein, (single) peak birth and death move types may be used, as well as a fixed dimension Metropolis-within-Gibbs move type, derived from the standard Metropolis-Hastings (MH) and Gibbs sampler schemes, as will be described in more detail below.

Vectorising equation (1) yields $y = FA + \varepsilon$ where $F := F(t, \mu)$ is a matrix satisfying $F_{ki} = \phi(t_k|\mu_i, \sigma^2)$. Linearity in $A$ is beneficial, but is not available for $\mu$. A Metropolis step may be used to sample $\mu$, which may require a proposal distribution to be chosen. The prior, $p(\mu|N)$, may typically be uninformative, and the likelihood complex, so the proposal is normally a random walk MH. Slice sampling may be used to propose new samples for each $\mu_i$. This method may provide a replacement for the random walk MH that does not require tuning. It may depend on the current $\mu_i$ sample, and so can produce several consecutive samples which yield a low acceptance probability. According to various embodiments, a proposal distribution may be provided which avoids this dependence, which may allow for better mixing of the RJ-MCMC sampling.

One way to avoid the complexity of allowing dimension-changing steps is to assume excessive dimensionality, in this case, assuming a fixed number of peaks which is more than the curve could comprise. The hope is that the amplitude samples of excess peaks are close to zero. As will be shown further below, peaks may cancel or combine to fit the data better as it can use the extra complexity to better explain the noise. However, this results in the samples poorly capturing the true curve. This remains a concern even when using RJ-MCMC schemes. However, according to various embodiments, the PPP may be provided to avoid this overfitting. Another method to overcome it is to propose peak merging and peak splitting steps. The strategy proposed here is simpler, by just preventing peaks from being near enough that a split or merge step would be necessary.

The RJ-MCMC scheme according to various embodiments will be described in the following. This involves specifying the reversible jump steps, which may be of birth and death varieties, as well as the fixed dimension step type. Within this last, which is responsible for the majority of the exploration of the parameter space of each dimension, a Metropolis-within-Gibbs scheme may be provided.

Let $j$ index the $S$ samples, $\{\mu^j, A^j\}$, the first $B$ of which are discarded. Then, with bracketed tildes being optional, define

$$\overset{(\sim)j}{\mu_i} = \left( \mu_{1:i-1}^{j\,T}, \overset{(\sim)j}{\mu_i}, \mu_{i+1:N^j}^{j-1\,T} \right)^T, \quad \tilde{\mu}_b^j = \left( \mu^{j-1\,T}, \tilde{\mu}_b^j \right)^T \quad (2)$$

where $\tilde{\mu}_i^j$ is the $j^{th}$ proposed sample for $\mu_i$ as is $\tilde{\mu}_b^j$, but for a new peak (in other words: a new-born peak, indicated by index "b"). Define these similarly for $A$ (where relevant). Also, let $\omega_{-1} = \omega \setminus \omega_1$, for any vector $\omega$. Finally, the number of peaks, $N$, may have a Poisson prior, whose parameter is $\lambda$: $p(N) \sim Po(\lambda)$.

The choice of prior for the amplitudes is chosen to yield tractability, and so is chosen to be Gaussian,

$$A \mid N \sim \mathcal{N}(m_A, \Sigma_A). \quad (3)$$

By standard Gaussian theory, the posterior becomes

$$p(A \mid \mu, y, N) = \mathcal{N}(A \mid \tilde{m}_A, \tilde{\Sigma}_A),$$
$$\tilde{m}_A = m_A + \Sigma_A F^T (F\Sigma_A F^T + \sigma_y^2 I_K)^{-1}(y - Fm_A), \quad (4)$$
$$\tilde{\Sigma}_A = \Sigma_A - \Sigma_A F^T (F\Sigma_A F^T + \sigma_y^2 I_K)^{-1} F\Sigma_A,$$

where $I_\circ$ is the $\circ \times \circ$ identity matrix. Then, $p(A_i|\boldsymbol{A}_{-i}, \boldsymbol{\mu}, \boldsymbol{y}, N)$, which can be derived by more Gaussian properties, becomes

$$p(A_i \mid \boldsymbol{A}_{-i}, \boldsymbol{\mu}, \boldsymbol{y}, N) = \mathcal{N}(A_i \mid m_i, \sigma_i^2),$$
$$m_i = \tilde{m}_{A_i} + \tilde{\boldsymbol{\Sigma}}_{A_{-ii}}^T \tilde{\boldsymbol{\Sigma}}_{A_{-i-i}}^{-1} \left( \boldsymbol{A}_{-i} - \tilde{m}_{A_{-i}} \right), \qquad (5)$$
$$\sigma_i^2 = \tilde{\Sigma}_{A_{ii}} - \tilde{\boldsymbol{\Sigma}}_{A_{-ii}}^T \tilde{\Sigma}_{A_{-i-i}}^{-1} \tilde{\boldsymbol{\Sigma}}_{A_{-ii}}.$$

It is from this that most amplitude samples will be generated.

The prior on the locations may be chosen to be independently uniform. However, in another embodiment, a modification to this may be provided, for example by using of the peak proximity parameter, $\delta$. For the interval, $L = [t_1, t_K]$,

$$p(\boldsymbol{\mu} \mid N) \propto 1(\boldsymbol{\mu} \in S_N),$$
$$S_N = \{\boldsymbol{\mu}' \in L : |\mu_i' - \mu_{i'}'| > \delta, \ \forall \ i, i' \leq N\} \qquad (6)$$

with $1(\circ)$ being the indicator function.

Using this (with or without $\delta$), the posterior is intractable, jointly or conditionally on the other locations. Thus, it may be desirable to define a proposal distribution for peak $i$, $q_\mu$, from which to get samples. For computational efficiency whilst retaining sample quality, use of the data within the proposal may be essential. As such, $q_\mu$ may be based on a discrete convolution between a discretised Gaussian peak and the 'unexplained' data, placing high probability of peak placement near to areas of insufficient data explanation. At all $t_k$ within $\delta$ of any $\mu_{i'}$, $i' \neq i$, the proposal, to match the prior, is set to zero. Then,

$$q_\mu(\mu_i = t_k \mid \boldsymbol{\mu}_{-i}, \boldsymbol{A}_{-i}, \boldsymbol{y}, N)$$
$$\propto \left| \sum_{k'=1}^{K} r_{k'}^i \phi(t_{k'} \mid t_k, \sigma^2) \right| \times 1\left( (\boldsymbol{\mu}_{-i}^T, t_k)^T \in S_N \right), \qquad (7)$$

where $r_{k'}^i = y_{k'} - F(t_{k'}, \boldsymbol{\mu}_{-i})\boldsymbol{A}_{-i}$ is the $k^{th}$ 'unexplained' datum without using peak $i$. As possible locations are continuous, $q_\mu$ is defined continuously by linear interpolation. With a slight abuse of set notation, let $\tilde{\boldsymbol{t}}$ be, in ascending order, $t$ and all points exactly $\delta$ from a current peak: $\tilde{\boldsymbol{t}} = t \cup \{\tau \in L | \exists i' \neq i : \tau = \mu_{i'} \pm \delta\}$. Hence, $q_\mu^*(\tilde{t}_k | \ldots) = q_\mu(t_k | \ldots)$ if $\tilde{t}_k = t_{k'}$, and zero if $\tilde{t}_k \in t$, is well defined. Thus, for $t \in [\tilde{t}_k, t_{k+1})$, we have

$$q_\mu(\mu_i = t \mid \boldsymbol{\mu}_{-i}, \boldsymbol{A}_{-i}, \boldsymbol{y}, N)$$
$$= \frac{\tilde{t}_{k+1} - t}{\tilde{t}_{k+1} - \tilde{t}_k} q_\mu(\tilde{t}_k \mid \ldots) + \frac{t - \tilde{t}_k}{\tilde{t}_{k+1} - \tilde{t}_k} q_\mu(\tilde{t}_{k+1} \mid \ldots). \qquad (8)$$

The normalising constant for (7), $Q^*$, may be computed as

$$Q^* = \frac{1}{2} \sum_{k=2}^{K} (\tilde{t}_k - \tilde{t}_{k-1})(q_\mu(\tilde{t}_{k-1} \mid \ldots) + q_\mu(\tilde{t}_k \mid \ldots)). \qquad (9)$$

Now the RJ-MCMC step types may be described: birth, death, and fixed dimension. For the fixed dimension type at step $j$ (thereby accepting $N^j = N^{j-1}$), each peak $i$ may be sampled,

$$\tilde{\mu}_i^j \sim q_\mu(\mu_i | \boldsymbol{\mu}_{-i}^j, \boldsymbol{A}_{-i}^j, \boldsymbol{y}, N^j), \quad \tilde{A}_i^j \sim p(A_i | \boldsymbol{A}_{-i}^j, \tilde{\mu}_i^j, \boldsymbol{y}, N^j). \qquad (10)$$

Both $\mu_i^j = \tilde{\mu}_i^j$ and $A_i^j = \tilde{A}_i^j$ may be accepted with probability $\alpha_i^j = \min(1, \tilde{\alpha}_i^j)$, where, after cancelling all distributions of the unchanged peak parameters, and the location priors, one finds

$$\tilde{\alpha}_i^j = \frac{p(\boldsymbol{y} \mid \tilde{\boldsymbol{\mu}}_i^j, \tilde{\boldsymbol{A}}_i^j, N^j)}{p(\boldsymbol{y} \mid \boldsymbol{\mu}_{i-1}^j, \boldsymbol{A}_{i-1}^j, N^j)} \frac{p(\tilde{\boldsymbol{A}}_i^j \mid \boldsymbol{A}_{-i}^j, \tilde{\boldsymbol{\mu}}_i^j, N^j)}{p(A_i^{j-1} \mid \boldsymbol{A}_{-i}^j, \boldsymbol{\mu}_{i-1}^j, N^j)}$$
$$\times \frac{p(A_i^{j-1} \mid \boldsymbol{A}_{-i}^j, \boldsymbol{\mu}_{i-1}^j, \boldsymbol{y}, N^j)}{p(\tilde{A}_i^j \mid \boldsymbol{A}_{-i}^j, \tilde{\boldsymbol{\mu}}_i^j, \boldsymbol{y}, N^j)} \frac{q_\mu(\mu_i^{j-1} \mid \boldsymbol{\mu}_{-i}^j, \boldsymbol{A}_{-i}^j, \boldsymbol{y}, N^j)}{q_\mu(\tilde{\mu}_i^j \mid \boldsymbol{\mu}_{-i}^j, \boldsymbol{A}_{-i}^j, \boldsymbol{y}, N^j)}. \qquad (11)$$

To clarify, a new peak $i$ is proposed, and this proposal is accepted (or rejected) before proposing the following peak.

For a birth type at step $j$, $\tilde{N}^j = N^{j-1} + 1$ is proposed, as is the new peak, together with all amplitudes jointly

$$\tilde{\mu}_b^j \sim q_\mu(\mu_b \mid \boldsymbol{\mu}^{j-1}, \boldsymbol{A}^{j-1}, \boldsymbol{y}, \tilde{N}^j), \quad \tilde{\boldsymbol{A}}^j \sim p(\boldsymbol{A} \mid \tilde{\boldsymbol{\mu}}_b^j, \boldsymbol{y}, \tilde{N}^j). \quad (12)$$

The apparent redundancy of sampling all amplitudes, rather than just that of the new peak, $A_b^j$, may be justified by the desire for all $A_i^j$ to be conditioned on this new peak's location. This choice may increase both the birth and death acceptance rates.

For a death step, $\tilde{N}^j = N^{j-1} - 1$ may be proposed, along with the peak to be deleted, $I$, which may be done with probability $p(i \mid \boldsymbol{A}^{j-1}, N^{j-1}) \propto \left| A_i^{j-1} \right|^{-1}$ (placing higher probability on less significant peaks), and all remaining amplitudes. That is,

$$I^j \sim p(i \mid \boldsymbol{A}^{j-1}, N^{j-1}), \quad \tilde{\boldsymbol{A}}^j \sim p(\boldsymbol{A} \mid \boldsymbol{\mu}_{-I^j}^{j-1}, \boldsymbol{y}, \tilde{N}^j). \qquad (13)$$

For the (generalised) acceptance probabilities of these step types, we define a useful function $\rho = \rho(\boldsymbol{\mu}, \boldsymbol{A}, a, i)$,

$$\rho = \frac{p(\boldsymbol{y} \mid \boldsymbol{\mu}, \boldsymbol{A}, N)}{p(\boldsymbol{y} \mid \boldsymbol{\mu}_{-i}, a, N-1)} \frac{p(\boldsymbol{A} \mid \boldsymbol{\mu}, N)}{p(a \mid \boldsymbol{\mu}_{-i}, N-1)} \frac{q_N(N-1 \mid N)}{q_N(N \mid N-1)}$$
$$\times \frac{p(a \mid \boldsymbol{\mu}_{-i}, \boldsymbol{y}, N-1)}{p(\boldsymbol{A} \mid \boldsymbol{\mu}, \boldsymbol{y}, N)} \frac{p(i \mid \boldsymbol{A}, N)}{q_\mu(\mu_i \mid \boldsymbol{\mu}_{-i}, a, \boldsymbol{y}, N)} \frac{1}{R} \frac{\lambda}{N}, \qquad (14)$$

where $N = \dim \boldsymbol{\mu}$, $q_N = (N|N')$ is the proposal of the step type for $N$ and $N'$, and $R = \int_L \mathbb{1}((\boldsymbol{\mu}_{-i}^T, t)^T \in S_N) dt$ is the length of all points $> \delta$ from all peaks. The acceptance probabilities (which include accepting $N^j = \tilde{N}^j$) for birth and death, $\beta^j = \min(1, \tilde{\beta}^j)$ and $\gamma^j = \min(1, \tilde{\gamma}^j)$, respectively, are then

$$\tilde{\beta}^j = \rho(\tilde{\boldsymbol{\mu}}_b^j, \tilde{\boldsymbol{A}}^j, \boldsymbol{A}^{j-1}, \tilde{N}^j), \quad \tilde{\gamma}^j = \rho(\boldsymbol{\mu}^{j-1}, \boldsymbol{A}^{j-1}, \tilde{\boldsymbol{A}}^j, I^j)^{-1} \quad (15)$$

For $q_N$, we choose $q_N(N + 1|N) = q_N(N - 1|N) = c$, for some $c$, when $N > 0$, and $q_N(1|0)=1$. Finally, initialization may be done with $N^0 = 0$ peaks.

The RJ-MCMC method according to various embodiments may be summarized as follows, wherein S may be the number of sampling steps to be performed:

---

**Input:** $\sigma^2, \lambda, S, B, m_A, \Sigma_A, \sigma_y^2, c, \delta$

**for** $1 \leq j \leq S$ **do**

    sample step type by sampling $\tilde{N}^j \sim q_N(N \mid N^{j-1})$

    **if** $\tilde{N}^j = N^j = N^{j-1}$ (fixed dimension) **then**

        **for** $1 \leq i \leq N^j$ **do**

            sample $\tilde{\mu}_i^j$ and $\tilde{A}_i^j$, as in (10)

            accept $\mu_i^j = \tilde{\mu}_i^j$ and $A_i^j = \tilde{A}_i^j$ with probability $\alpha_i^j$,

              using (11)

    **else if** $\tilde{N}^j = N^{j-1} + 1$ (birth) **then**

        sample $\tilde{\mu}_b^j$ and $\tilde{A}^j$, as in (12)

        accept $N^j = \tilde{N}^j$, $\mu^j = \tilde{\mu}_b^j$ and $A^j = \tilde{A}^j$ with

           probability $\beta^j$, using (14)

    **else if** $\tilde{N}^j = N^{j-1} - 1$ (death) **then**

        sample $I^j$ and $\tilde{A}^j$, as in (13)

        accept $N^j = \tilde{N}^j$, $\mu^j = \mu_{-I}^j$ and $A^j = \tilde{A}^j$ with

           probability $\gamma^j$, again using (14)

**Output:** $\{\mu^j, A^j, N^j\}_{j=B+1}^S$

---

In the following, experimentation results will be provided.

The method according to various embodiments, using the PPP, is compared against the same model, only without the PPP; this may illustrate the effect of $\delta$. The model without the PPP may only differ from its counterpart in the prior on locations, which is now simply uniform, and the proposal distribution, $q_\mu$, which simplifies by avoiding the need to define $t$, instead being just the linear interpolation of $q_\mu(t|...)$.

Comparisons are made on both synthetic 1D (one-dimensional) data and real measurements from a TDR sensor.

Each of the 100 synthetic data sets is generated from the priors of the model without the PPP. From the samples generated, a 'fitted curve' can be found:

$$\hat{x}(t) = \frac{1}{S-B} \sum_{j=B+1}^S F(t, \mu^j) A^j. \qquad (16)$$

Five metrics are considered. Firstly is the Root Mean Square Error (RMSE) between the true and fitted curves. The next two, 'overlap' and 'cancellation' averaged over samples, aim to quantify overfitting, by comparison to the same on the true curve. The 'overlap' for $i, i'$ same-sign peaks (i.e., $\text{sign}(A_i^j) = \text{sign}(A_{i'}^j)$ is

$$\frac{(\sqrt{2\pi}\sigma)^{-1}}{\sum_{i \leq N^j} |A_i^j|} \int_{\mathbb{R}} \min_x \left\{ A_i^j \phi(x|\mu_i^j, \sigma^2), A_{i'}^j \phi(x|\mu_{i'}^j, \sigma^2) \right\} dx, \qquad (17)$$

including standardisation via division of the total peak area. The 'overlap' metric is (17) summed over all same-sign peaks, and averaged over samples. Cancellation is simply the area under the linear interpolation of $|F^j A^j|$, standardised as for overlap, and averaged over samples. The final metrics are the average number of peaks per sample, and the average run time, in seconds (machine: Apple M1, CPU@3.2GHz, 16GB RAM). If a method has much higher overlap and cancellation than the true curve, but fits the data well, then this indicates probable overfitting.

Both methods are given the same hyperparameters, which, where relevant, are the same as those used to generate the data. Namely, $(S, B, \sigma^2, \lambda, c, \sigma_y^2) =$ (300, 100, 20, 5, 0.1, 1). All peaks are treated symmetrically and

independently, so $(\boldsymbol{m}_A, \Sigma_A) = (\boldsymbol{0}_N, \sigma_A^2 I_N), \forall N$, with $\sigma_A^2 = 100$. Additionally, for the model using it, the PPP is $\delta = \frac{\sigma}{2} = \sqrt{5}$. Its relatively small size compared to the peak 'width', $\approx 6\sigma$', is noteworthy.

**Table 1:** Averaged results across all 100 synthetic data sets.

| Method | RMSE | Overlap | Cancel | $N$ | Time (s) |
|--------|------|---------|--------|-----|----------|
| $\delta$ used | 3.88 | 0.04 | 0.07 | 4.39 | 2.25 |
| No $\delta$ | 4.31 | 0.15 | 0.39 | 12.4 | 6.40 |
| Truth | 0 | 0.04 | 0.11 | 4.86 | - |

The averaged results for all 100 data sets are shown in Table 1.

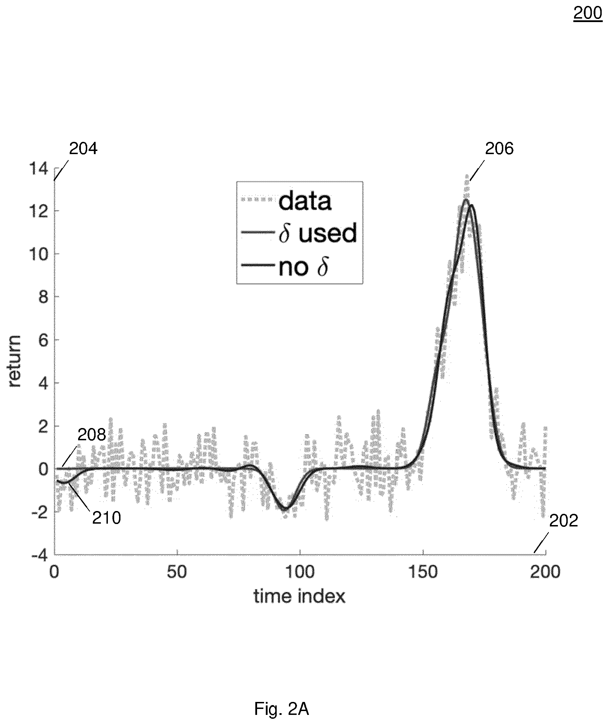

Fig. 2A shows an illustration 200 of the fitted curves for both models (the model using $\delta$ illustrated by line 208; and the model not using $\delta$ illustrated by line 210) over the data (illustrated by dashed line 206) according to various embodiments. A horizontal axis 202 illustrates a time index, and a vertical axis 204 illustrates a return (for example corresponding to the echo curve). Both methods fit the data similarly well, with use of $\delta$ giving only marginal improvement. The four true peaks have $\boldsymbol{\mu} \approx (94, 158, 168, 174)^T$ and $\boldsymbol{A} \approx (-2, 5, 11, 3)^T$. Three are very close, but the PPP model (i.e. the model using $\delta$) is still able to fit the data well. However, its use allows for seemingly more accurate representation of the true curve; the overlap and cancellation metrics are far nearer to those for the true curve than without the PPP (i.e. the model not using $\delta$).

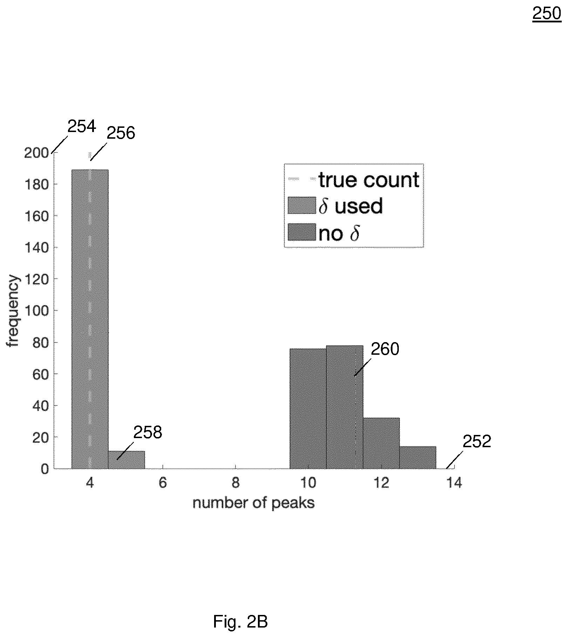

Fig. 2B shows an illustration 250 of the approximate posteriors $p(N|\boldsymbol{y})$, for the final data set according to various embodiments. A horizontal axis 252 illustrates the number of peaks, and a vertical axis 254 illustrates the frequency. The average estimated number of peaks with $\delta$ (illustrated by blocks 258) is much closer to the ground truth of 4 (illustrated by dashed line 256) than without (illustrated by blocks 260), slightly underestimating rather than largely overestimating. This underestimation may be reasonable, since true peaks with $A \approx 0$ are unlikely to be modelled. Despite the additional complexity of using the PPP, the average run time is much faster, due to the reduction in peaks being modelled. It is to be noted that the code has not been optimised, however should be comparable between the two methods, due to sharing of functions and structure. The most obvious drawback of using the PPP is if true peaks are closer than $\delta$ together. This does not appear to be an issue, at least in this experiment (the RMSE may be inflated were it so). If this is systematically the case in an application, then use of $\delta$ may be carefully considered there, and the method may be used without the use of $\delta$.

For further evaluation, real unprocessed TDR measurements may be used. This data may be for an oil medium with a dielectric constant of approximately 2, at a low level (24.7mm) in a sealed container; TDR vertical probe is of length $\approx$ 900mm. The resultant echo curve may be provided with a sampling period of T $\approx$ 60.9ps.

**Table 2:** Estimating the fluid level of a TDR set-up, both with and without use of $\delta$. The known fluid level generates a peak at 113.5, which is considered the ground truth.

| Method | $\hat{\mu}$ | Error | $N$ | Time (s) |
|--------|-------------|-------|-----|----------|
| $\delta$ used | 111.3 | 2.2 | 2.4 | 1.0 |
| No $\delta$ | 109.9 | 3.6 | 4.5 | 2.8 |

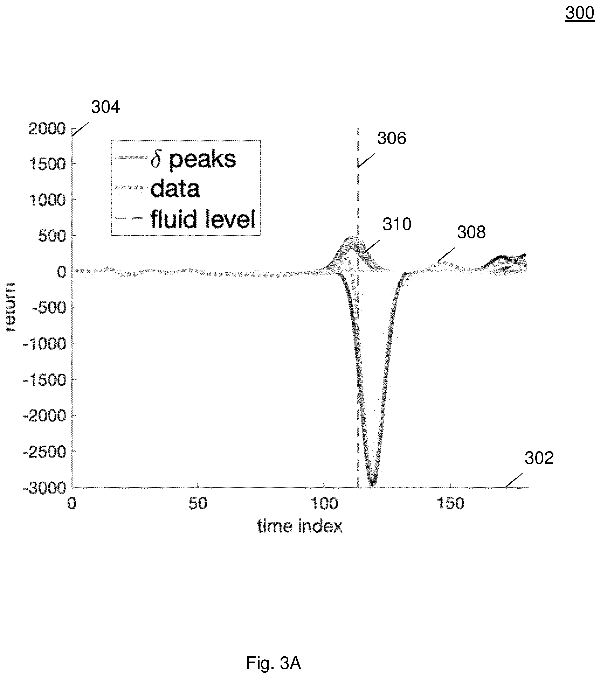

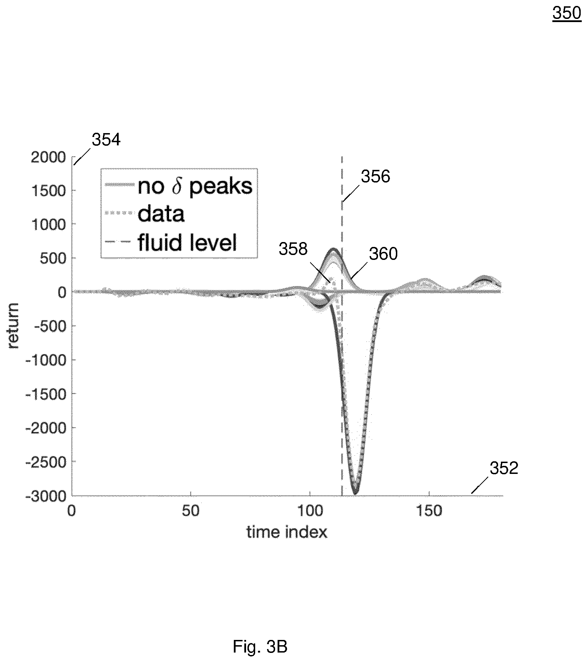

Inference on this data set yields Fig. 3A and Fig. 3B, showing individual peaks which model the data, and performance metrics in Table 2.

Fig. 3A shows an illustration 300 of peaks from all samples of the model with $\delta$ according to various embodiments, overlaid with the data and the ground truth level. A horizontal axis 302 illustrates a time index, and a vertical axis 304 illustrates a return (for example corresponding to the echo curve). The peaks are illustrated by solid lines 310, the data is illustrated by dotted line 308, and the time index corresponding to the fluid level is illustrated by dashed line 306.

Fig. 3B shows an illustration 350 of peaks from all samples of the model without $\delta$ according to various embodiments, overlaid with the data and the ground truth level. A horizontal axis 352 illustrates a time index, and a vertical axis 354 illustrates a return (for example corresponding to the echo curve). The peaks are illustrated by solid lines 360, the data is illustrated by dotted line 358, and the time index corresponding to the fluid level is illustrated by dashed line 356.

Whilst the 'true curve' is unknown, the fluid level's peak is known in the experiment. An estimate of this, $\hat{\mu}$, is found for both methods and, as the synthetic experiment suggested may be the case, the use of the PPP results in a better representation of the curve, shown by the more accurate fluid level estimate. It is noted that the pulse reflected from the medium level (with positive amplitude) is not clearly visible in Fig. 3A and Fig. 3B, since it heavily overlaps with the stronger negative reflection from the probe's end. As before, the average number of peaks is lesser with the PPP than without, which increases run time. A nonlinear least squares method may struggle to get a sensible estimate for this data set, and does not learn the number of peaks as standard.

When making a crude (but reasonable) approximation to the full posterior

$$p(\boldsymbol{\mu}, \boldsymbol{A}, N \mid \boldsymbol{y}) \approx p(\boldsymbol{\mu}, \boldsymbol{A} | \tilde{N}, \boldsymbol{y}) 1(N = \tilde{N})$$

by fixing the number of peaks to the best estimate, Ñ, only one result (for the fixed number of peaks) may be provided.

The methods according to various embodiments may use Reversible Jump MCMC, which may make a better approximation of the full posterior (albeit at higher cost) by varying N in a more complex way.

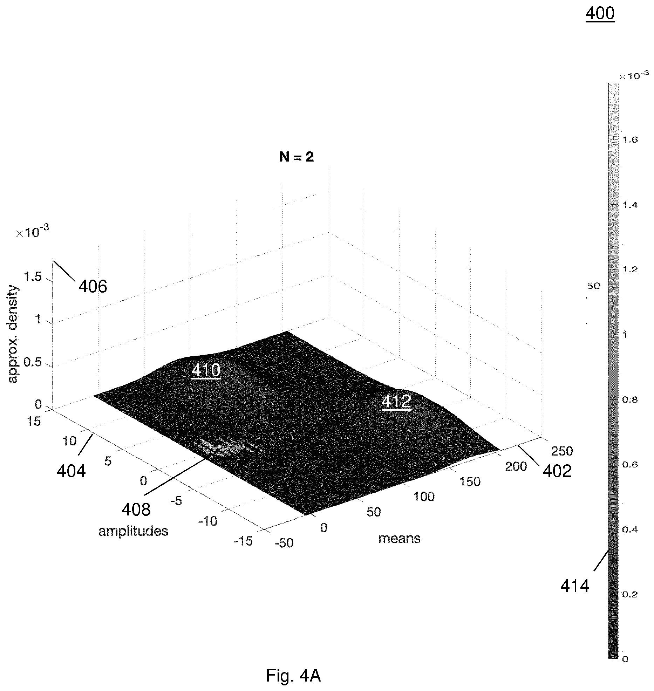

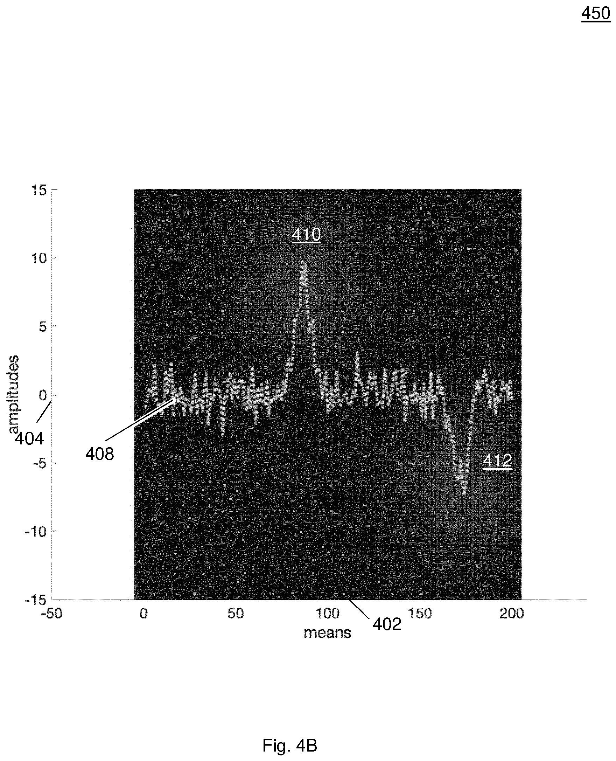

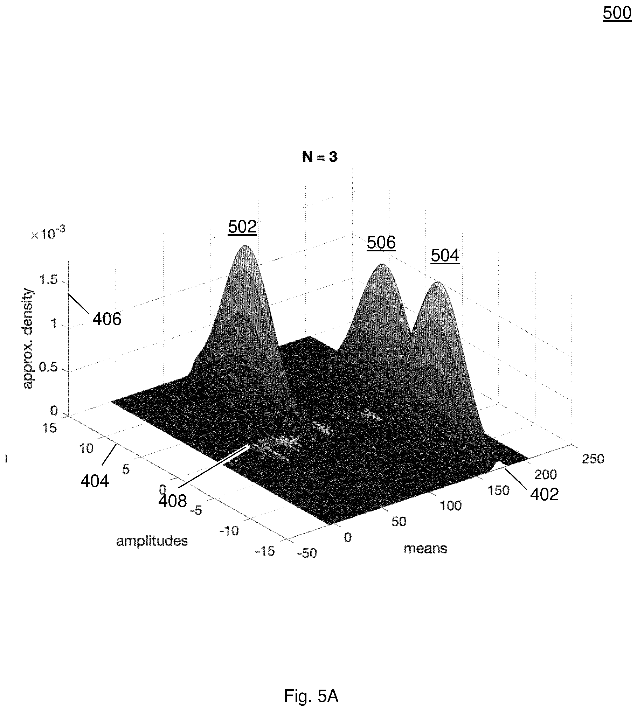

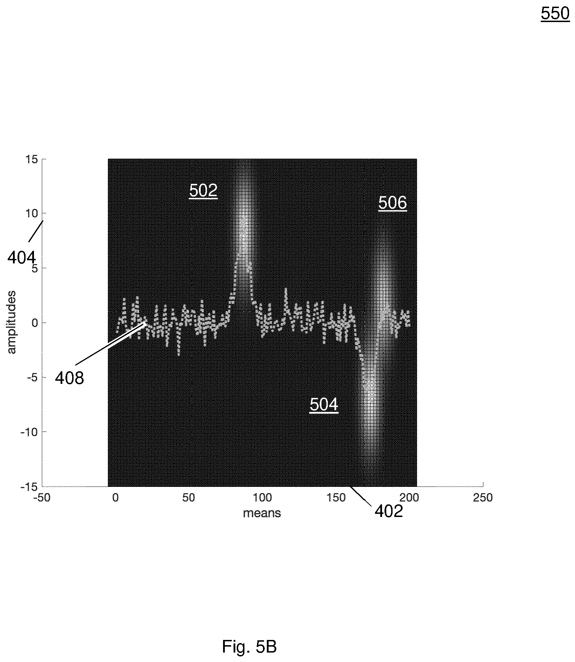

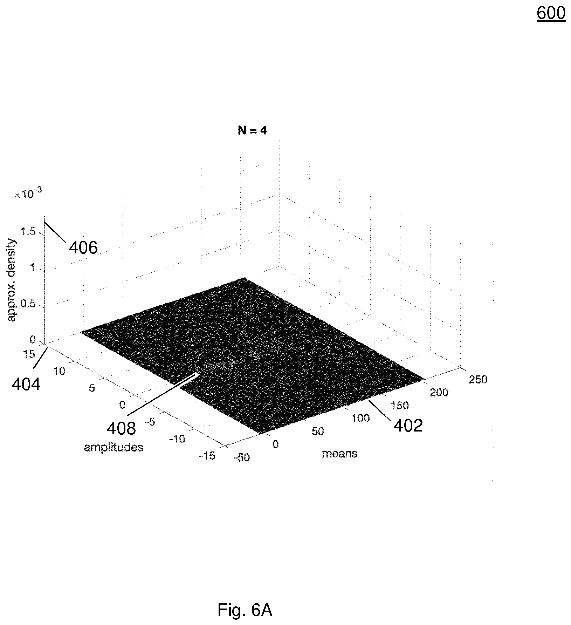

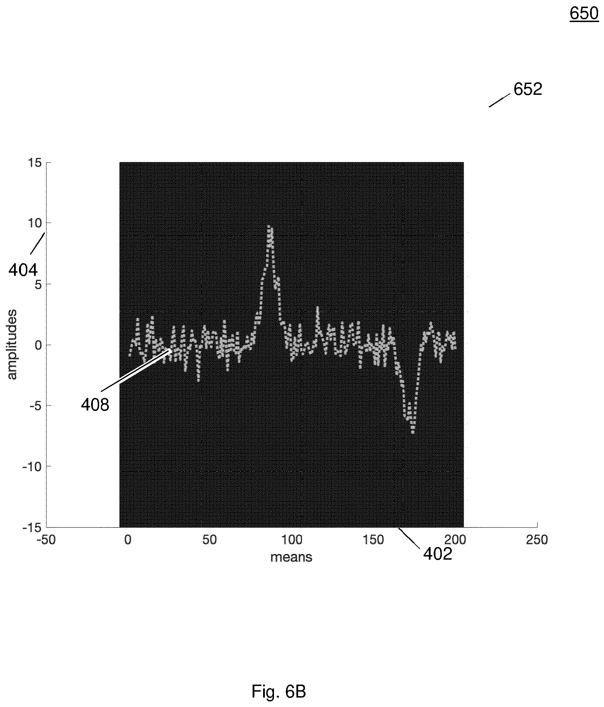

Figs. 4A, 4B, 5A, 5B, 6A, 6B show illustrations 400, 450, 500, 550, 600, and 650 of the full posterior according to various embodiments for two peaks ($N = 2$, in Fig. 4A and Fig. 4B), for three peaks ($N = 3$, in Fig. 5A and Fig. 5B), and for four peaks ($N = 4$, in Fig. 6A and Fig. 6B). In Figs. 4A, 4B, 5A, 5B, 6A, 6B, the plots have means (illustrated along axis 402) and amplitudes (illustrated along axis 404), and a density (illustrated by axis 406, and by grey scale 414). The synthetic data 408 based on which the inference was made is shown for reference.

Each surface is shown with two plots (for two peaks Fig. 4A and Fig. 4B, for three peaks Fig. 5A and Fig. 5B, and for four peaks in Fig. 6A and Fig. 6B), where in Figs. 4A, 5A, and 6A the height of the peaks can be seen, and in Figs. 4B, 5B, and 6B a view from above is shown. However, Fig. 4A and Fig. 4B show the same plot (in other words, the same data). Likewise, Fig. 5A and Fig. 5B show the same plot (in other words, the same data). Likewise, Fig. 6A and Fig. 6B show the same plot (in other words, the same data).

Figs. 4A and 4B show two peaks 410 and 412.

Figs. 5A and 5B show three peaks 502, 504, and 506.

The four peaks in Figs. 6A and 6B are so low that they cannot be easily seen.

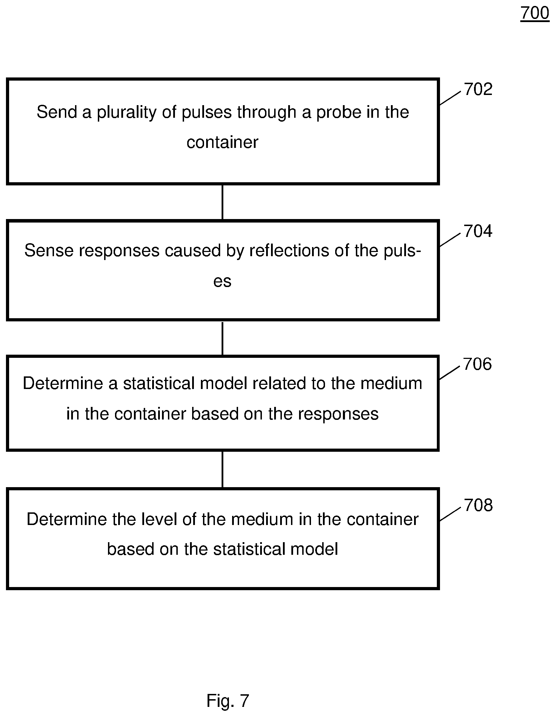

Fig. 7 shows a flow diagram 700 illustrating a method for determining a level of a medium in a container according to various embodiments. At 702, a plurality of pulses may be sent through a probe in the container. At 704, responses caused by reflections of the pulses may be sensed. At 706, a statistical model related to the medium in the container may be determined based on the responses. At 708, the level of the medium in the container may be determined based on the statistical model.

According to the invention, the statistical model represents an echo curve.

According to various embodiments, the statistical model may include or may be a probability distribution.

According to various embodiments, the statistical model may be determined based on fitting parameters of the probability distribution to the sensed responses.

According to various embodiments, the parameters may include or may be one or more of: mean, amplitude, and number of peaks.

According to various embodiments, the statistical model may be determined using a Markov Chain Monte Carlo interference technique.

According to various embodiments, determining the statistical model may include adding peaks, removing peaks, or maintaining a number of peaks.

According to various embodiments, a prior and/or proposal distributions in the statistical model may be determined based on a peak proximity parameter.

According to various embodiments, the method may further include determining point estimates for locations and amplitudes of (for example positive) pulses based on the statistical model. According to various embodiments, the level of the medium in the container may be determined based on the point estimates.

According to various embodiments, the method may further include determining locations of the reflections based on the point estimates. According to various embodiments, the level of the medium in the container may be determined based on the locations of the reflections.

According to various embodiments, the method may further include tracking of the level of the medium in the container.

According to various embodiments, the method may further include decomposing the statistical model into a plurality of reflections.

According to various embodiments, the method may further include identifying the medium based on the plurality of reflections.

According to various embodiments, the method may further include identifying a medium situation based on the plurality of reflections.

Various embodiments provide a method for pulse fitting with RJ-MCMC via the use of a peak proximity parameter, $\delta$. This prevents pulses from encroaching on one another, reducing overfitting by not considering an excessive number of underlying peaks. The benefits of this approach are demonstrated on both synthetic and real TDR data. Results show that the formulation according to various embodiments not only significantly improves the learning of the latent data model, but also substantially reduces the computational complexity, as captured by the run times. These derive from the reduction of peaks being modelled, thus circumventing the aforementioned overfitting and requiring fewer computations. Various embodiments may be applied to high dimensional signals.

The methods as described herein, including MCMC, may effectively find the best model that fits the observed data (in other words: best fits the TDR echo curve), including the number of pulses it contains. Thus, the method according to various embodiments may be a pulse fitting (optimisation) method, which may also be referred to as pulse separation method.

The methods according to various embodiments provide a solution with the statistical nature, i.e. involving statistical approaches. The possibility of both negative and positive reflections may be addressed by the Bayesian pulse fitting methods according to various embodiments by enabling to learn $N$ (i.e. the number of pulses). The methods according to various embodiments provide an efficient MCMC scheme due to both the marginalised sample acceptance approach (i.e. accept/reject each proposed $\tilde{\mu}_n$ individually, rather than accepting/rejecting their collective, $\tilde{\mu}$), and a data-driven proposal distribution used to sample said pulse means, improving efficiency.

The methods according to various embodiments may accurately estimate medium levels under different scenarios, including for low level fluids and layered mediums. The methods may not require a mechanical change to the TDR sensor probe. The methods may not entail any changes to the processing chain or hardware. The methods may permit incorporating, in a principled way, known prior information (for example based on the probe length and/or type of fluid) to deliver accurate TDR sensing.

According to various embodiments, the sensed medium may be fully characterised by decomposing the echo curve into individual pulses. This may permit additional TDR sensing capabilities such as the automatic identification of the medium (for example identification of the type of the fluid) and the measurement scenario (for example whether a medium with one layer is present or whether a multiple layers medium (in other words: a medium with more than one layer) is present, and/ or whether foam is present).

According to various embodiments, the medium level may be tracked over time via extending the MCMC formulation to include a dynamical model on the medium level. This may improve the robustness of the results (for example to mitigate outliers).

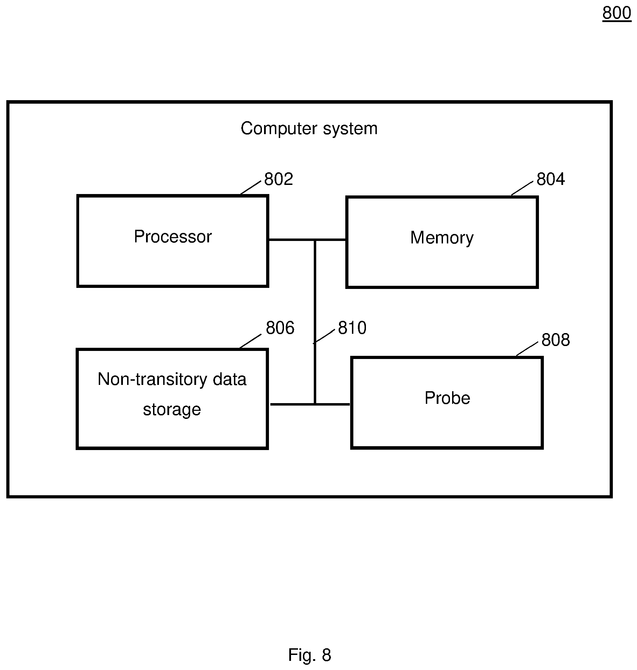

Fig. 8 shows a computer system 800 with a plurality of computer hardware components configured to carry out steps of a computer implemented method for determining a level of a medium in a container according to various embodiments.

The computer system 800 may include a processor 802, a memory 804, and a non-transitory data storage 806. A probe 808 (which may include an emitter and a sensor) may be provided as part of the computer system 800 (like illustrated in Fig. 8), or may be provided external to the computer system 800.

The processor 802 may carry out instructions provided in the memory 804. The non-transitory data storage 806 may store a computer program, including the instructions that may be transferred to the memory 804 and then executed by the processor 802. The probe 808 may include (or may act as) an emitter configured to send a plurality of pulses through a probe in a container. The probe 808 may further include (or may further act as) a sensor configured to sense responses caused by reflections of the pulses.

The processor 802, the memory 804, and the non-transitory data storage 806 may be coupled with each other, e.g. via an electrical connection 810, such as e.g. a cable or a computer bus or via any other suitable electrical connection to exchange electrical signals. The probe 808 may be coupled to the computer system 800, for example via an external interface, or may be provided as parts of the computer system (in other words: internal to the computer system, for example coupled via the electrical connection 810).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 800.

Reference numeral list

100     illustration of an echo curve
102     echo curve
104     probe
106     container
108     medium
110     level in the container

| 112 | level in the container |
|-----|----------------------|
| 114 | level of the surface of the medium in the container |
| 118 | horizontal axis |
| 120 | vertical axis |
| 122 | peak at time $\tau_0$ |
| 124 | peak at time $\tau_1$ |
| 126 | peak at time $\tau_2$ |
| 128 | peak at time $\tau_3$ |
| 130 | desired ToF |

| 200 | illustration of fitted curves |
|-----|------------------------------|
| 202 | horizontal axis |
| 204 | vertical axis |
| 206 | dashed line |
| 208 | line |
| 210 | line |

| 250 | illustration of approximate posteriors |
|-----|---------------------------------------|
| 252 | horizontal axis |
| 254 | vertical axis |
| 256 | dashed line |
| 258 | blocks |
| 260 | blocks |

| 300 | illustration of peaks |
|-----|----------------------|
| 302 | horizontal axis |
| 304 | vertical axis |
| 306 | dashed line |
| 308 | dotted line |
| 310 | solid lines |

| 350 | illustration of peaks |
|-----|----------------------|
| 352 | horizontal axis |
| 354 | vertical axis |
| 356 | dashed line |
| 358 | dotted line |
| 360 | solid lines |

| 400 | illustrations of full posterior with two peaks |
|-----|-----------------------------------------------|
| 402 | axis |
| 404 | axis |
| 406 | axis |
| 408 | synthetic data |
| 410 | peak |
| 412 | peak |
| 414 | grey scale |

| 450 | illustrations of full posterior with two peaks |
|-----|-----------------------------------------------|

| 500 | illustrations of full posterior with three peaks |
|-----|-------------------------------------------------|
| 502 | peak |
| 504 | peak |
| 506 | peak |

| 550 | illustrations of full posterior with three peaks |
|-----|-------------------------------------------------|

| 600 | illustrations of full posterior with four peaks |
|-----|------------------------------------------------|

650    illustrations of full posterior with four peaks

700    flow diagram illustrating a method for determining a level of a medium in a container according to various embodiments
702    step of sending a plurality of pulses through a probe in the container
704    step of sensing responses caused by reflections of the pulses
706    step of determining a statistical model related to the medium in the container based on the responses
708    step of determining the level of the medium in the container based on the statistical model

800    computer system according to various embodiments
802    processor
804    memory
806    non-transitory data storage
808    probe
810    connection

**Claims**

1. Computer implemented method for determining a level of a medium in a container,
   the method comprising the following steps carried out by computer hardware components:

   sending (702) a plurality of pulses through a probe in the container;
   sensing (704) responses caused by reflections of the pulses;
   determining (706) a statistical model related to the medium in the container based on the responses; and
   determining (708) the level of the medium in the container based on the statistical model;
   **characterised in that**
   the statistical model represents an echo curve.

2. The computer implemented method of claim 1,
   wherein the statistical model comprises a probability distribution.

3. The computer implemented method of claim 2,
   wherein the statistical model is determined based on fitting parameters of the probability distribution to the sensed responses.

4. The computer implemented method of claim 3,
   wherein the parameters comprise one or more of: mean, amplitude, and number of peaks.

5. The computer implemented method of at least one of claims 1 to 4,
   wherein the statistical model is determined using a Markov Chain Monte Carlo interference technique.

6. The computer implemented method of at least one of claims 1 to 5, wherein determining (706) the statistical model comprises adding peaks, removing peaks, or maintaining a number of peaks.

7. The computer implemented method of at least one of claims 1 to 6, wherein a prior and/or proposal distributions in the statistical model are determined based on a peak proximity parameter.

8. The computer implemented method of at least one of claims 1 to 7, further comprising:

   determining point estimates for locations and amplitudes of pulses based on the statistical model;
   wherein the level of the medium in the container is determined based on the point estimates.

9. The computer implemented method of claim 8, further comprising:

   determining locations of the reflections based on the point estimates;
   wherein the level of the medium in the container is determined based on the locations of the reflections.

10. The computer implemented method of at least one of claims 1 to 9, further comprising:

tracking of the level of the medium in the container.

11. The computer implemented method of at least one of claims 1 to 10, further comprising:
    decomposing the statistical model into a plurality of reflections.

12. The computer implemented method of claim 11, further comprising:

    identifying the medium based on the plurality of reflections; and/ or
    identifying a medium situation based on the plurality of reflections.

13. Non-transitory computer readable medium comprising instructions which, when executed by a computer system, make the computer system carry out the computer implemented method of at least one of claims 1 to 12.

14. Probing system, comprising:

    an emitter configured to send a plurality of pulses through a probe in a container;
    a sensor configured to sense responses caused by reflections of the pulses;
    a determination circuit configured to determine a statistical model related to a medium in the container based on the responses, and to determine a level of the medium in the container based on the statistical model;
    **characterised in that**
    the statistical model represents an echo curve.


**Patentansprüche**

1. Computerimplementiertes Verfahren zum Bestimmen eines Niveaus eines Mediums in einem Behälter, wobei das Verfahren die folgenden Schritte umfasst, die durch Computerhardwarekomponenten ausgeführt werden:

    Senden (702) einer Vielzahl von Impulsen durch eine Sonde in dem Behälter;
    Erfassen (704) von Reaktionen, die durch Reflexionen der Impulse verursacht werden;
    Bestimmen (706) eines statistischen Modells, das sich auf das Medium in dem Behälter bezieht, basierend auf den Reaktionen; und
    Bestimmen (708) des Niveaus des Mediums in dem Behälter basierend auf dem statistischen Modell;
    **dadurch gekennzeichnet, dass** das statistische Modell eine Echokurve darstellt.

2. Computerimplementiertes Verfahren nach Anspruch 1,
   wobei das statistische Modell eine Wahrscheinlichkeitsverteilung umfasst.

3. Computerimplementiertes Verfahren nach Anspruch 2,
   wobei das statistische Modell basierend auf Anpassungsparametern der Wahrscheinlichkeitsverteilung an die erfassten Reaktionen bestimmt wird.

4. Computerimplementiertes Verfahren nach Anspruch 3,
   wobei die Parameter eines oder mehrere von Folgendem umfassen: Mittelwert, Amplitude und Anzahl von Spitzen.

5. Computerimplementiertes Verfahren nach einem der Ansprüche 1 bis 4, wobei das statistische Modell unter Verwendung einer Markov-Ketten-Monte-Carlo-Interferenztechnik bestimmt wird.

6. Computerimplementiertes Verfahren nach einem der Ansprüche 1 bis 5, wobei das Bestimmen (706) des statistischen Modells das Hinzufügen von Spitzen, das Entfernen von Spitzen oder das Aufrechterhalten einer Anzahl von Spitzen umfasst.

7. Computerimplementiertes Verfahren nach einem der Ansprüche 1 bis 6, wobei vorherige und/oder vorgeschlagene Verteilungen in dem statistischen Modell basierend auf einem Spitzennäheparameter bestimmt werden.

8. Computerimplementiertes Verfahren nach einem der Ansprüche 1 bis 7, ferner umfassend:

    Bestimmen von Punktschätzungen für Orte und Amplituden von Impulsen basierend auf dem statistischen Modell;
wobei das Niveau des Mediums in dem Behälter basierend auf den Punktschätzungen bestimmt wird.

9. Computerimplementiertes Verfahren nach Anspruch 8, ferner umfassend:

Bestimmen von Orten der Reflexionen basierend auf den Punktschätzungen;
wobei das Niveau des Mediums in dem Behälter basierend auf den Orten der Reflexionen bestimmt wird.

10. Computerimplementiertes Verfahren nach einem der Ansprüche 1 bis 9, ferner umfassend:
Verfolgen des Niveaus des Mediums in dem Behälter.

11. Computerimplementiertes Verfahren nach einem der Ansprüche 1 bis 10, ferner umfassend:
Zerlegen des statistischen Modells in eine Vielzahl von Reflexionen.

12. Computerimplementiertes Verfahren nach Anspruch 11, ferner umfassend:

Identifizieren des Mediums basierend auf der Vielzahl von Reflexionen; und/oder
Identifizieren einer Mediumsituation basierend auf der Vielzahl von Reflexionen.

13. Nichtflüchtiges computerlesbares Medium, das Anweisungen umfasst, die, wenn sie durch ein Computersystem ausgeführt werden, das Computersystem veranlassen, das computerimplementierte Verfahren nach einem der Ansprüche 1 bis 12 auszuführen.

14. Sondensystem, umfassend:

einen Emitter, der konfiguriert ist, um eine Vielzahl von Impulsen durch eine Sonde in einem Behälter zu senden;
einen Sensor, der konfiguriert ist, um Reaktionen zu erfassen, die durch Reflexionen der Impulse verursacht werden;
eine Bestimmungsschaltung, die konfiguriert ist, um ein statistisches Modell, das sich auf ein Medium in dem Behälter bezieht, basierend auf den Reaktionen zu bestimmen, und um ein Niveau des Mediums in dem Behälter basierend auf dem statistischen Modell zu bestimmen;
**dadurch gekennzeichnet, dass** das statistische Modell eine Echokurve darstellt.

**Revendications**

1. Procédé mis en œuvre par ordinateur pour déterminer le niveau d'un milieu dans un récipient, le procédé comprenant les étapes suivantes, exécutées par des composants matériels informatiques et consistant à :

envoyer (702) une pluralité d'impulsions à travers une sonde dans le récipient ;
détecter (704) les réponses causées par les réflexions des impulsions ;
déterminer (706) un modèle statistique lié au milieu dans le récipient sur la base des réponses ; et
déterminer (708) le niveau du milieu dans le récipient sur la base du modèle statistique ;
**caractérisé en ce que**
le modèle statistique représente une courbe d'écho.

2. Procédé mis en œuvre par ordinateur selon la revendication 1,
dans lequel le modèle statistique comprend une distribution de probabilité.

3. Procédé mis en œuvre par ordinateur selon la revendication 2,
dans lequel le modèle statistique est déterminé sur la base de l'ajustement de paramètres de la distribution de probabilité aux réponses détectées.

4. Procédé mis en œuvre par ordinateur selon la revendication 3,
dans lequel les paramètres comprennent un ou plusieurs des suivants : moyenne, amplitude et nombre de pics.

5. Procédé mis en œuvre par ordinateur selon au moins l'une des revendications 1 à 4,
dans lequel le modèle statistique est déterminé à l'aide d'une technique d'interférence de Monte Carlo par chaînes de Markov.

6. Procédé mis en œuvre par ordinateur selon au moins l'une des revendications 1 à 5, dans lequel déterminer (706) le modèle statistique consiste à ajouter des pics, supprimer des pics ou maintenir un nombre de pics.

7. Procédé mis en œuvre par ordinateur selon au moins l'une des revendications 1 à 6, dans lequel des distributions a priori et/ou proposées dans le modèle statistique sont déterminées sur la base d'un paramètre de proximité des pics.

8. Procédé mis en œuvre par ordinateur selon au moins l'une des revendications 1 à 7, consistant en outre à :

   déterminer des estimations ponctuelles pour des emplacements et des amplitudes des impulsions sur la base du modèle statistique ;
   dans lequel le niveau du milieu dans le récipient est déterminé sur la base des estimations ponctuelles.

9. Procédé mis en œuvre par ordinateur selon la revendication 8, consistant en outre à :

   déterminer les emplacements des réflexions sur la base des estimations ponctuelles ;
   dans lequel le niveau du milieu dans le récipient est déterminé sur la base des emplacements des réflexions.

10. Procédé mis en œuvre par ordinateur selon au moins l'une des revendications 1 à 9, consistant en outre à : suivre le niveau du milieu dans le récipient.

11. Procédé mis en œuvre par ordinateur selon au moins l'une des revendications 1 à 10, consistant en outre à : décomposer le modèle statistique en une pluralité de réflexions.

12. Procédé mis en œuvre par ordinateur selon la revendication 11, consistant en outre à :

   identifier le milieu sur la base de la pluralité de réflexions ; et/ou
   identifier une situation du milieu sur la base de la pluralité de réflexions.

13. Support non transitoire lisible par ordinateur comprenant des instructions qui, lorsqu'elles sont exécutées par un système informatique, amènent le système informatique à mettre en œuvre le procédé mis en œuvre par ordinateur selon au moins l'une des revendications 1 à 12.

14. Système de sondage, comprenant :

   un émetteur configuré pour envoyer une pluralité d'impulsions à travers une sonde dans un récipient ;
   un capteur configuré pour détecter les réponses causées par les réflexions des impulsions ;
   un circuit de détermination configuré pour déterminer un modèle statistique lié à un milieu dans le récipient sur la base des réponses, et pour déterminer un niveau du milieu dans le récipient sur la base du modèle statistique ;
   **caractérisé en ce que**
   le modèle statistique représente une courbe d'écho.

Fig. 1

Fig. 2A

Fig. 2B

Fig. 3A

Fig. 3B

Fig. 4A

Fig. 4B

Fig. 5A

Fig. 5B

600

Fig. 6A

650

652

Fig. 6B

<u>700</u>

```
┌─────────────────────────────────────┐ ╱ 702
│  Send a plurality of pulses through  │
│          a probe in the             │
│            container                 │
└─────────────────────────────────────┘

┌─────────────────────────────────────┐ ╱ 704
│  Sense responses caused by          │
│  reflections of the puls-           │
│            es                       │
└─────────────────────────────────────┘

┌─────────────────────────────────────┐ ╱ 706
│  Determine a statistical model      │
│  related to the medium              │
│  in the container based on the      │
│  responses                          │
└─────────────────────────────────────┘

┌─────────────────────────────────────┐ ╱ 708
│  Determine the level of the medium  │
│  in the container                   │
│  based on the statistical model     │
└─────────────────────────────────────┘
```

Fig. 7

800

Computer system

Processor 802

Memory 804

Non-transitory data storage 806

810

Probe 808

Fig. 8

**EP 4 524 525 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11193809 B2
- US 5587969 A
- US 2010006786 A1